# FASCICULE DE BREVET EUROPEEN

(11) **EP 2 164 744 B1**
(45) Date de publication et mention de la délivrance du brevet: **21.09.2011**
(21) Numéro de dépôt: 08757295.4
(22) Date de dépôt: 04.07.2008
(51) Int. Cl.: B62B 3/00, B62D 61/04, B60K 7/00, B60K 6/48

(54) **VEHICULE AUTOMOBILE DU TYPE HYBRIDE**
HYBRIDKRAFTFAHRZEUG
HYBRID MOTOR VEHICLE

(30) Priorité: 05.07.2007 CH 10832007
(43) Date de publication de la demande: 24.03.2010
(73) Titulaire: Assystem S.A., 75017 PARIS (FR)
(72) Inventeur: SBARRO, Francesco, CH-1422 Grandson (CH)
(74) Mandataire: Nithardt, Roland
(86) Numéro de dépôt international: PCT/CH2008/000302
(87) Numéro de publication internationale: WO 2009/003304

(56) Documents cités:
- DE-A1- 3 128 905
- DE-A1- 19 800 738
- DE-U1- 20 313 576
- FR-A- 2 822 430
- GB-A- 740 999
- GB-A- 2 179 899
- US-A- 4 775 021
- CALVET P ET AL: "Roue autonome Motrice SBARRO" ARTICLE INTERNET, [Online] 2 septembre 2006 (2006-09-02), XP002465977 Extrait de l'Internet: URL:http://web.archive.org/web/20060902195 744/http://clcalvet.club.fr/sbarro/ram/ram gb.html> [extrait le 2008-01-24]

## Description

La présente invention concerne un véhicule automobile du type hybride comportant un châssis, une carrosserie montée sur ce châssis, deux roues directrices et deux roues motrices.

La plupart des véhicules automobiles connus comportent un châssis sensiblement rectangulaire et quatre roues disposées aux quatre angles de ce châssis. La carrosserie portée par le châssis dépend de l'usage prévu et peut se présenter sous diverses formes allant du cabriolet au véhicule familial ou utilitaire, ou au tout-terrain à quatre roues motrices, etc.

Du point de vue de la motorisation, toutes les variantes sont envisageables et la tendance actuelle va vers les véhicules dits hybrides qui comportent un moteur thermique et un moteur électrique enclenchables alternativement ou simultanément. Cette tendance est liée à des problèmes écologiques et à une volonté de réduire l'utilisation de combustible fossile ainsi qu'à des problèmes économiques dus au coût de plus en plus élevé de ces combustibles fossiles.

La maniabilité de tous les véhicules automobiles est limitée par le rayon de braquage de leurs roues directrices, ce qui les rend peu maniables et complique les manoeuvres de stationnement, notamment en ville. La différence d'un véhicule à l'autre est faible et dépend principalement de l'encombrement du châssis. La réalisation de véhicules ayant quatre roues directrices est compliquée et, de ce fait, ne s'est pas étendue aux véhicules courants.

La sécurité passive est liée principalement à la capacité que possède la carrosserie du véhicule de se déformer en cas de choc. Un choc frontal est la plupart du temps mortel pour les occupants car la partie avant du véhicule présente une résistance limitée. La plupart des véhicules automobiles ne comportent plus de châssis indépendant puisqu'il est intégré à une carrosserie autoportante. La résistance au choc est meilleure lorsque le contact se fait latéralement, sous un certain angle, contre les roues, selon un angle qui positionne la partie la plus rigide du véhicule dans l'axe du choc.

Les véhicules actuels présentent de nombreux défauts, tels ceux mentionnés ci-dessus, que les constructeurs essaient de corriger. Les mesures prises sont individuelles et chaque amélioration ne corrige qu'un défaut, en introduisant éventuellement d'autres ou en amplifiant certains inconvénients existants. Le problème de la maniabilité n'est corrigé que par une réduction de l'encombrement. Le problème de la consommation ne peut être corrigé que par la réduction de la masse du véhicule et par l'adaptation de moteurs à faible consommation. Le problème de la pollution ne peut être solutionné que par l'utilisation de moteurs propres, tels que des moteurs électriques. Le problème de la résistance aux chocs trouve une solution partielle dans la conception de carrosseries étudiées pour former un habitacle qui ne se déforme pas ou peu, ce qui ne correspond que très partiellement aux réalisations actuelles.

Diverses tentatives ont été faites pour essayer d'apporter des solutions aux problèmes existants.

DE 31 28 905 A divulgue un véhicule automobile, comportant un châssis, une carrosserie montée sur ce châssis, deux roues directrices et deux roues motrices, dans lequel le châssis porte une unité directrice frontale et une unité directrice arrière, chaque unité directrice étant agencée pour former un bloc indépendant et étant équipée d'un support portant une roue ledit support étant articulé par rapport au châssis, dans lequel la roue de l'unité directrice frontale et la roue de l'unité directrice arrière sont alignées sensiblement sur l'axe de symétrie longitudinal du châssis, respectivement à l'avant et à l'arrière du véhicule, dans lequel deux roues de stabilisation sont disposées latéralement de part et d'autre de l'axe de symétrie longitudinal du châssis. La caractéristique principale de ce véhicule est que les roues peuvent s'incliner par rapport à la verticale.

GB-A-2 179 899 divulgue un autre véhicule automobile pourvu de deux supports des unités à la fois motrices et directrices que sont mobiles autour d'un axe sensiblement vertical et dans lequel les supports ont un angle de rotation de 360 deg.

La publication allemande DE 198 00 738 A1 concerne un véhicule automobile à quatre roues disposées comme précédemment sur l'axe longitudinal du véhicule, en ce qui concerne les deux roues principales et latéralement en ce qui concerne deux roues annexes pouvant être entraînées électriquement.

Le brevet américain US 4 775 021 a pour objet un véhicule automobile à quatre roues disposées comme dans les deux publications précédentes selon l'axe longitudinal et sur un axe transversal. Les quatre roues sont motrices, mais seules la roue avant et la roue arrière sont directrices. Leur axe est pivotant sur un bras de suspension solidaire d'un châssis.

La publication allemande DE 203 13 576 décrit également un véhicule à quatre roues disposées en losange, dont seules les roues disposées sur l'axe longitudinal sont en contact avec le sol lors du déplacement de ce véhicule en ligne droite, les roues latérales servant à assurer la stabilité du véhicule uniquement dans les courbes.

Toutes les solutions proposées ne permettent pas de répondre globalement à un cahier des charges dont le but est la réalisation d'un véhicule répondant aux exigences actuelles en matière d'écologie, de maniabilité, de flexibilité, de confort et de sécurité.

La présente invention se propose de pallier globalement ces inconvénients en réalisant un véhicule automobile du type hybride, qui présente une grande maniabilité et dont la sécurité passive, notamment en cas de choc frontal, est fortement accrue.

Ce but est atteint par le véhicule automobile selon l'invention tel que défini en préambule, dans lequel le châssis porte une unité à la fois motrice et directrice frontale et une unité à la fois motrice et directrice arrière, chaque unité à la fois motrice et directrice étant agencée pour former un bloc indépendant et étant équipée d'un support portant un moteur et une roue entraînée par ce moteur, ledit support étant articulé par rapport au châssis, dans lequel la roue de l'unité à la fois motrice et directrice frontale et la roue de l'unité à la fois motrice et directrice arrière sont alignées sensiblement sur l'axe de symétrie longitudinal du châssis, respectivement à l'avant et à l'arrière du véhicule, dans lequel les deux roues de stabilisation sont en roulement libre et disposées latéralement de part et d'autre de l'axe de symétrie longitudinal du châssis et dans lequel les supports s des deux unités à la fois motrices et directrices sont mobiles autour d'un axe sensiblement vertical et ont un angle de rotation de 360°.

L'une des deux unités à la fois motrices et directrices peut comporter un moteur thermique et l'autre unité peut comporter un moteur électrique.

Dans la forme de réalisation préférée, les supports des deux unités à la fois motrices et directrices sont couplés de telle manière qu'un pivotement angulaire de l'unité à la fois motrice et directrice frontale entraîne un pivotement angulaire équivalent, mais dans le sens opposé, de l'unité à la fois motrice et directrice arrière.

Ledit support de chacune des unités à la fois motrices et directrices peut être monté sur un roulement ayant une bague extérieure liée au châssis et une bague intérieure, rotative par rapport à la bague extérieure, qui porte au moins la roue correspondante.

Le moteur et la roue de chaque unité à la fois motrice et directrice sont de préférence portés par ladite bague de roulement intérieure correspondante et les deux bagues de roulement intérieures sont angulairement liées.

De façon avantageuse, chaque roue de chaque unité à la fois motrice et directrice est associée à une suspension qui est portée par ladite bague de roulement intérieure.

Les supports des deux unités à la fois motrices et directrices peuvent être couplés par au moins un élément souple.

La présente invention et ses avantages seront mieux compris à la lecture de la description détaillée d'une forme de réalisation de l'invention, en référence aux dessins annexés donnés à titre indicatif et non limitatif, dans lesquels:

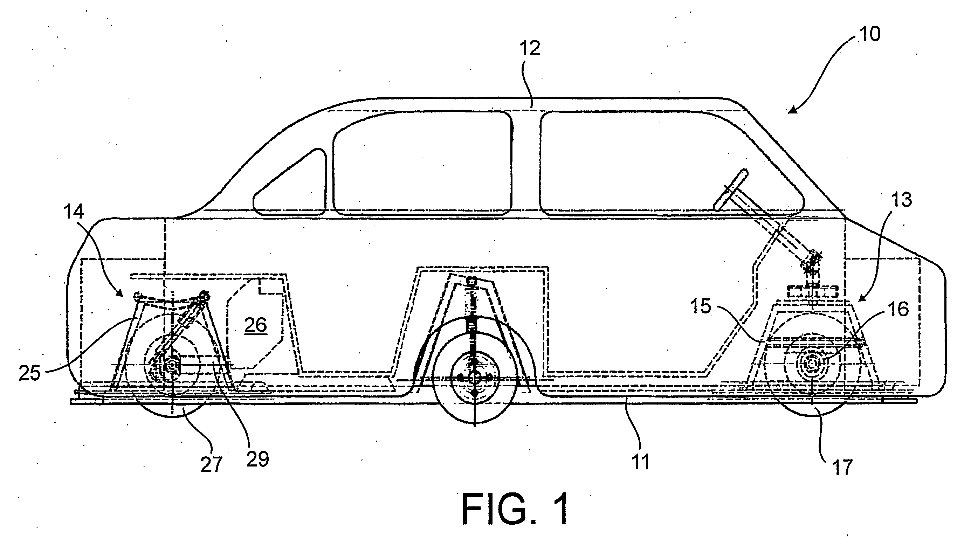

la figure 1 est une vue schématique représentant une vue d'ensemble en élévation du véhicule selon l'invention,

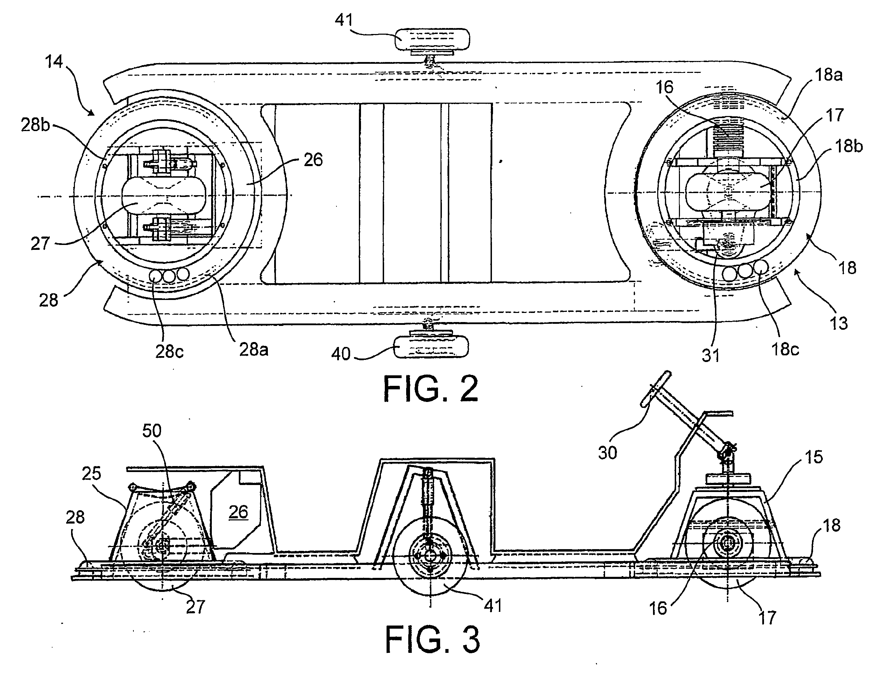

la figure 2 est une vue schématique en plan du véhicule de la figure 1, et
la figure 3 est une vue partielle en élévation du châssis et des unités motrices et directrices respectivement frontale et arrière.

En référence aux figures, le véhicule automobile 10 selon l'invention comporte un châssis 11, une carrosserie 12 montée sur ce châssis 11, une unité à la fois directrice et motrice frontale 13 et une unité à la fois directrice et motrice arrière 14, chacune de ces unités formant un bloc indépendant.

L'unité à la fois motrice et directrice frontale 13 est équipée d'un support 15, portant un moteur 16 et une roue 17 entraînée par le moteur 16. Ledit support 15 est articulé par rapport au châssis 11 et comporte une base circulaire portant un roulement à billes ou à rouleaux 18 de grand diamètre ayant une bague extérieure 18a et une bague intérieure 18b entre lesquelles est disposée une couronne de billes ou de rouleaux 18c. La bague extérieure 18a est solidaire du châssis 11, la liaison étant réalisée au moyen de soudures ou de boulons ou similaires. La bague intérieure 18b est rotative par rapport à la bague extérieure 18a et porte des bras de suspension sur lesquels est montée la roue 17. Le moteur 16 est directement couplé à la roue 17. Ce moteur est avantageusement un moteur électrique de relativement faible puissance, qui constitue un moteur d'appoint, capable d'entraîner à lui seul le véhicule ou de compléter la puissance d'un moteur principal qui sera décrit ci-après.

L'unité à la fois directrice et motrice arrière 14 est également équipée d'un support 25, portant un moteur 26 et une roue 27 entraînée par le moteur 26. Ledit support 25 est articulé par rapport au châssis 11 et comporte une base circulaire portant un roulement à billes ou à rouleaux 28 de grand diamètre ayant une bague extérieure 28a et une bague intérieure 28b entre lesquelles est disposée une couronne de billes ou de rouleaux 28c. La bague extérieure 28a est solidaire du châssis 11, la liaison étant réalisée au moyen de soudures ou de boulons ou similaires. La bague intérieure 28b est rotative par rapport à la bague extérieure 28a et porte des bras de suspension sur lesquels est montée la roue 27. Le moteur 26 est directement couplé à la roue 27. Ledit moteur 26, qui est le moteur principal, est de préférence un moteur thermique dont l'arbre de sortie 29 est couplé à la roue arrière 27.

Les deux supports, respectivement 15 et 25, comportent une base circulaire et sont couplés au châssis 11 par des roulements, de sorte qu'ils peuvent tourner sur eux-mêmes de 360°. Cette solution résout un des problèmes évoqués précédemment, à savoir la maniabilité du véhicule. En effet, le véhicule automobile 10 selon l'invention est capable de tourner sur lui-même et le système de supports confère au véhicule un rayon de braquage inégalé. Le positionnement angulaire des roues avant 17 et arrière 27 est commandé simultanément par un volant 30 qui, par l'intermédiaire d'une réduction, par exemple à courroie 31, est couplé à la roue avant 17. Les roues avant 17 et arrière 27 sont suspendues de manière classique au moyen de ressorts et d'amortisseurs tels que l'amortisseur 50 de la roue arrière 27.

Par ailleurs, un élément souple (non représenté), tel qu'un câble, une courroie croisée ou similaire, relie les deux supports respectivement avant et arrière 15 et 25 de telle manière qu'une rotation d'un angle déterminé du support avant 15, commandée par la rotation du volant 30, engendre une rotation opposée du même angle du support arrière 25. Cette construction est à l'origine de la maniabilité du véhicule automobile 10 selon l'invention.

La position centrale des roues avant 17 et arrière 27, montées à l'intérieur des bases circulaires des supports 15 et 25 qui ont un diamètre sensiblement égal à la largeur du véhicule automobile 10, prolonge le châssis et renforce considérablement la rigidité du véhicule en offrant une meilleure résistance aux chocs frontaux. En effet, avant de porter atteinte à l'habitacle, les chocs sont absorbés par la déformation du support avant, avec de surcroît, la présence d'une ceinture pneumatique qui est la roue 17.

La stabilité du véhicule automobile 10 est assurée par l'existence de deux roues de stabilisation latérales 40 et 41 montées en roue libre sur leur axe médian, transversal par rapport à l'axe de symétrie longitudinal du véhicule. Ces roues ne sont ni directrices ni motrices et ne servent que d'appui et de stabilisateurs.

L'utilisation de deux moteurs, respectivement électrique 16 et thermique 26, permet d'optimiser la consommation en énergie du véhicule automobile 10 et de l'adapter aux normes écologiques des voitures dites propres.

La carrosserie 12 est montée sur le châssis 11 au moyen de boulons ou similaires. Cette carrosserie qui constitue l'habitacle du véhicule est en fait e et montée sur le châssis autoportant. De cette manière le constructeur peut décliner le véhicule de différentes manières, par exemple en berline, en coupé, en cabriolet, en véhicule utilitaire etc. Cette conception permet une grande souplesse de construction et autorise la variation de la gamme de véhicules à partir d'éléments de base communs.

Les avantages du véhicule automobile selon l'invention sont obtenus par l'originalité de sa construction. La base du concept constructif repose sur l'utilisation de deux blocs indépendants qui sont couplés par des roulements de grand diamètre au châssis autoportant et qui contiennent à la fois les roues avec leur suspension et les moyens d'entraînement. Divers éléments peuvent être modifiés et complétés par l'homme du métier sans que l'invention sorte du cadre défini par les revendications.

## Revendications

1. Véhicule automobile (10) du type hybride, comportant un châssis (11), une carrosserie (12) montée sur ce châssis, deux roues directrices (17, 27) et deux roues motrices (17, 27), dans lequel le châssis (11) porte une unité à la fois motrice et directrice frontale (13) et une unité à la fois motrice et directrice arrière (14), chaque unité à la fois motrice et directrice (13, 14) étant agencée pour former un bloc indépendant et étant équipée d'un support (15, 25) portant un moteur (16, 26) et une roue (17, 27) entraînée par ce moteur, ledit support (15, 25) étant articulé par rapport au châssis (11), dans lequel la roue (17) de l'unité à la fois motrice et directrice frontale (13) et la roue (27) de l'unité à la fois motrice et directrice arrière (14) sont alignées sensiblement sur l'axe de symétrie longitudinal du châssis (11), respectivement à l'avant et à l'arrière du véhicule (10), dans lequel les deux roues de stabilisation (40, 41) sont en roulement libre et disposées latéralement de part et d'autre de l'axe de symétrie longitudinal du châssis (11), et dans lequel les supports (15, 25) des deux unités à la fois motrices et directrices (13, 14) sont mobiles autour d'un axe sensiblement vertical et ont un angle de rotation de 360°.

2. Véhicule automobile selon la revendication 1, **caractérisé en ce que** l'une (14) des deux unités à la fois motrices et directrices (13, 14) comporte un moteur thermique (26), et **en ce que** l'autre unité (13) comporte un moteur électrique (16).

3. Véhicule automobile selon la revendication 1, **caractérisé en ce que** les supports (15, 25) des deux unités à la fois motrices et directrices (13, 14) sont couplés de telle manière qu'un pivotement angulaire de l'unité à la fois motrice et directrice frontale (13) entraîne un pivotement angulaire équivalent, mais dans le sens opposé, de l'unité à la fois motrice et directrice arrière (14).

4. Véhicule automobile selon la revendication 1, **caractérisé en ce que** le support (15, 25) de chacune des unités à la fois motrices et directrices (13, 14) est monté sur un roulement (18, 28) ayant une bague extérieure (18a, 28a) liée au châssis (11) et une bague intérieure (18b, 28b), rotative par rapport à la bague extérieure, qui porte au moins la roue correspondante (17, 27).

5. Véhicule automobile selon les revendications 1 et 4, **caractérisé en ce que** le moteur (16, 26) et la roue (17, 27) de chaque unité à la fois motrice et directrice (13, 14) sont portés par ladite bague de roulement intérieure correspondante (18b, 28b), lesdites bagues de roulement intérieures étant angulairement liées.

6. Véhicule automobile selon la revendication 4, **caractérisé en ce que** chaque roue (17, 27) de chaque unité à la fois motrice et directrice (13, 14) est associée à une suspension qui est portée par ladite bague de roulement intérieure (18b, 28b).

7. Véhicule automobile selon la revendication 1, **caractérisé en ce que** les supports (15, 25) des deux unités à la fois motrices et directrices (13, 14) sont couplés par au moins un élément souple.

8. Véhicule automobile selon la revendication 1, **caractérisé en ce que** lesdites roues de stabilisation (40, 41) sont disposées sensiblement à proximité de l'axe médian transversal du châssis (11).

## Claims

1. Motor vehicle (10) of the hybrid type, comprising a chassis (11), a body (12) mounted on said chassis, two steering wheels (17, 27) and two drive wheels (17, 27), in which the chassis (11) carries a front unit which is both driving and steering (13) and a rear unit which is both driving and steering (14), each driving and steering unit (13, 14) being arranged to form an independent block and being equipped with a support (15, 25) carrying a motor (16, 26) and a wheel (17, 27) entrained by this motor, said support (15, 25) being articulated in relation to the chassis (11), in which the wheel (17) of the front driving and steering unit (13) and the wheel (27) of the rear driving and steering unit (14) are aligned essentially on the longitudinal symmetry axis of the chassis (11), respectively at the front and rear of the vehicle (10), in which the two stabilisation wheels (40, 41) are in free rotation and disposed laterally on either side of the longitudinal symmetry axis of the chassis (11), and in which the supports (15, 25) of the two driving and steering units (13, 14) are mobile about an essentially vertical axis and have a rotation angle of 360°.

2. Motor vehicle according to claim 1, **characterised in that** one (14) of the two driving and steering units (13, 14) comprises a thermal motor (26) and **in that** the other unit (13) comprises an electric motor (16).

3. Motor vehicle according to claim 1, **characterised in that** the supports (15, 25) of the two driving and steering units (13, 14) are coupled in such a way that an angular pivoting of the front driving and steering unit (13) entrains an equivalent angular pivoting, but in the opposite direction, of the rear driving and steering unit (14).

4. Motor vehicle according to claim 1, **characterised in that** the support (15, 25) of each of the driving and steering units (13, 14) is mounted on a bearing (18, 28) having an outer race (18a, 28a) connected to the chassis (11) and an inner race (18b, 28b), which is rotational in relation to the outer race, which carries at least the corresponding wheel (17, 27).

5. Motor vehicle according to claims 1 and 4, **characterised in that** the motor (16, 26) and the wheel (17, 27) of each driving and steering unit (13, 14) are carried by said corresponding inner bearing race (18b, 28b), said inner bearing races being angularly connected.

6. Motor vehicle according to claim 4, **characterised in that** each wheel (17, 27) of each driving and steering unit (13, 14) is associated with a suspension which is carried by said inner bearing race (18b, 28b).

7. Motor vehicle according to claim 1, **characterised in that** the supports (15, 25) of the two driving and steering units (13, 14) are coupled by at least one flexible element.

8. Motor vehicle according to claim 1, **characterised in that** said stabilisation wheels (40, 41) are disposed essentially in proximity to the transverse median axis of the chassis (11).

## Patentansprüche

1. Hybrid-Kraftfahrzeug (10), welches ein Fahrgestell (11), eine auf dem Fahrgestell angebrachte Karosserie (12), zwei lenkbare Räder (17, 27) und zwei Antriebsräder (17, 27) aufweist, wobei das Fahrgestell (11) eine gleichzeitig antreibende und leitende vordere Einheit (13) und eine gleichzeitig antreibende und leitende hintere Einheit (14) aufweist, wobei jede gleichzeitig antreibende und leitende Einheit (13, 14) angeordnet ist, um einen unabhängigen Block auszubilden, der mit einem Träger (15, 25) ausgerüstet ist, der einen Motor (16, 26) und ein Rad (17, 27) trägt, welches von dem Motor angetrieben wird, wobei der Träger (15, 25) im Verhältnis zu dem Fahrgestell (11) gelenkig gelagert angeordnet ist, in dem das Rad (17) der gleichzeitig antreibenden und leitenden vorderen Einheit (13) und das Rad (27) der gleichzeitig antreibenden und leitenden hinteren Einheit (14) im Wesentlichen auf der Symmetrielängsachse des Fahrgestells (11) jeweils im vorderen und im hinteren Teil des Fahrzeuges (10) ausgerichtet sind, wobei die zwei Stabilisierungsräder (40, 41) freilaufend und seitlich beiderseits der Symmetrielängsachse des Fahrgestells (11) angeordnet sind, und wobei die Träger (15, 25) der zwei gleichzeitig antreibenden und leitenden Einheiten (13, 14) um eine im Wesentlichen vertikale Achse bewegbar sind, und einen Rotationswinkel von 360° aufweisen.

2. Kraftfahrzeug nach Anspruch 1,
**dadurch gekennzeichnet, dass** die eine der zwei gleichzeitig antreibenden und leitenden Einheiten (13, 14) einen Verbrennungsmotor (26) aufweist, und dass die andere Einheit (13) einen Elektromotor (16) aufweist.

3. Kraftfahrzeug nach Anspruch 1,
**dadurch gekennzeichnet, dass** die Träger (15, 25) der zwei gleichzeitig antreibenden und leitenden Einheiten (13, 14) so gekoppelt sind, dass eine Winkelrotation der gleichzeitig antreibenden und leitenden vorderen Einheit (13) eine gleichwertige Winkelrotation der gleichzeitig antreibenden und leitenden hinteren Einheit (14) herbeiführt, jedoch in der entgegengesetzten Richtung.

4. Kraftfahrzeug nach Anspruch 1,
**dadurch gekennzeichnet, dass** der Träger (15, 25) von jeder der gleichzeitig antreibenden und leitenden Einheiten (13, 14) auf einem Lager (18, 28) angebracht ist, welches einen äußeren Laufring (18a, 28a), der mit dem Fahrgestell (11) verbunden ist, und einen inneren Laufring (18b, 28b) aufweist, der im Verhältnis zu dem äußeren Laufring, der mindestens das entsprechende Rad (17, 27) trägt, drehbar ist.

5. Kraftfahrzeug nach den Ansprüchen 1 und 4,
**dadurch gekennzeichnet, dass** der Motor (16, 26) und das Rad (17, 27) von jeder gleichzeitig antreibenden und leitenden Einheit (13, 14) von dem entsprechenden inneren Laufring (18b, 28b) getragen werden, wobei die inneren Laufringe winklig verbunden sind.

6. Kraftfahrzeug nach Anspruch 4,
**dadurch gekennzeichnet, dass**
jedes Rad (17, 27) von jeder gleichzeitig antreibenden und leitenden Einheit (13, 14) mit einer Radaufhängung verbunden ist, die von dem inneren Laufring (18b, 28b) getragen wird.

7. Kraftfahrzeug nach Anspruch 1,
**dadurch gekennzeichnet, dass** die Träger (15, 25) der zwei gleichzeitig antreibenden und leitenden Einheiten (13, 14) mittels mindestens einem nachgiebigen Element verbunden sind.

8. Kraftfahrzeug nach Anspruch 1,
**dadurch gekennzeichnet, dass** die Stabilisierungsräder (40, 41) im Wesentlichen in der Nähe der transversalen Mittelachse des Fahrgestells (11) angeordnet sind.
